# EUROPÄISCHE PATENTSCHRIFT

(11) **EP 3 079 875 B1**
(45) Veröffentlichungstag und Bekanntmachung des Hinweises auf die Patenterteilung: **24.04.2019**
(21) Anmeldenummer: 14781181.4
(22) Anmeldetag: 07.10.2014
(51) Int. Cl.: B29C 33/10, B29D 30/06

(54) **VULKANISATIONSFORM**
VULCANIZATION MOLD
MOULE DE VULCANISATION

(30) Priorität: 09.12.2013 DE 102013225298
(43) Veröffentlichungstag der Anmeldung: 19.10.2016
(73) Patentinhaber: Continental Reifen Deutschland GmbH, 30165 Hannover (DE)
(72) Erfinder: BRANDAU, Christian, 31542 Bad Nenndorf (DE); DIENSTHUBER, Franz, 60528 Frankfurt (DE)
(74) Vertreter: Finger, Karsten
(86) Internationale Anmeldenummer: PCT/EP2014/071378
(87) Internationale Veröffentlichungsnummer: WO 2015/086186

(56) Entgegenhaltungen:
- WO-A1-2007/028438
- DE-A1-102004 014 007
- JP-A- 2003 154 527
- KR-A- 20040 088 880
- US-A1- 2008 277 038
- US-A1- 2013 118 660

## Beschreibung

Die Erfindung betrifft eine Vulkanisationsform zum Vulkanisieren eines Fahrzeugluftreifens, insbesondere eines PKW-Winterreifens, mit Formensegmenten, welche den profilierten Laufstreifen des Reifens ausformen und Formstege aufweisen, die Vertiefungen zur Ausformung von Profilblöcken oder blockartigen Profilpositiven bilden, wobei in Vertiefungen Lamellenbleche zur Ausformung von Einschnitten in den Profilblöcken bzw. blockartigen Profilpositiven verankert sind, wobei die Lamellenbleche die Vertiefungen in Abschnitte unterteilen, in welchen jeweils zumindest eine Entlüftungsbohrung im Formsegment ausgebildet ist.

Eine Vulkanisationsform der eingangs genannten Art ist beispielsweise aus der JP 2003 154 527 A bekannt. Die US 2013 011 866 0 A1 offenbart ein Formsegment einer Vulkanisationsform eines Fahrzeugluftreifens, wobei Profilblöcke ausformende Teilbereiche des Formsegmentes an der Innenseite mit einer Vielzahl von Erhebungen versehen sind, die am Laufstreifen Mikrorillen ausbilden. Aus WO 2007/028438 A1 ist ein Fahrzeugluftreifen mit einem Laufstreifen mit Mikroeinschnitten, die eine Breite von 0,1 mm bis 0,3 mm aufweisen, bekannt.

Beim Einformen eines Reifenrohlings in eine Vulkanisationsform wird die in der Vulkanisationsform vorhandene Luft zwischen dieser und dem Reifenrohling eingeschlossen und muss abgeführt werden. Es ist daher üblich, Vulkanisationsformen zu entlüften, indem eine Vielzahl von Entlüftungsbohrungen ausgebildet wird, welche ein Abführen der eingeschlossenen Luft gewährleisten. In Entlüftungsbohrungen werden meist Entlüftungseinheiten mit Ventilen eingesetzt, die bei eingeformtem Reifenrohling die Entlüftungsbohrungen verschließen und daher das Entstehen von Gummiaustrieben während der Vulkanisation des Rohreifens verhindern. Bei Laufstreifenprofilen, die mit Profilblöcken und/oder blockartigen Profilpositiven abgebildet werden, ist es üblich, die Entlüftungsbohrungen an den seitlichen Randbereichen der Vertiefungen, die die Blöcke bzw. die blockartigen Profilpositive ausformen, zu positionieren. Sind Lamellenbleche vorgesehen, die in den Blöcken bzw. Profilpositiven schmale Einschnitte ausformen, werden meistens pro Abschnitte je zwei Entlüftungsbohrungen vorgesehen. Bei langen Vertiefungsabschnitten kann zusätzlich noch jeweils eine mittige Entlüftungsbohrung vorgesehen werden. Wird nun die eingeschlossene Luft nicht vollständig abgeführt können unregelmäßig ausgeformte Blockelementkanten, insbesondere im Bereich der durch die Lamellenbleche gebildeten Einschnitte, entstehen.

Der Erfindung liegt die Aufgabe zugrunde, eine Vulkanisationsform derart auszuführen, dass die Block- und Einschnittkanten exakt ausgebildet werden, sodass die im Laufstreifen gebildeten Blockkanten und Einschnitte ihre für eine optimale Schnee- und Eisperformance erforderliche Wirkung entfalten können.

Gelöst wird die gestellte Aufgabe erfindungsgemäß dadurch, dass in den Abschnitten der Vertiefungen parallel zur Erstreckung der Lamellenbleche jeweils eine Anzahl von den jeweiligen Abschnitt durchquerenden Erhebungen ausgebildet ist, welche gerade verlaufen und eine Basisbreite und eine maximale Höhe von 0,2 mm bis 0,3 mm aufweisen, deren gegenseitiger Abstand zwischen 1 mm und 1,5 mm beträgt und die in ihrem Verlauf durch die Entlüftungsbohrungen unterbrochen sind.

Die Erhebungen wirken beim Einformen des Reifenrohlings als Abstandhalter, wodurch die eingeschlossene Luft in eine Vielzahl von Teilluftmengen aufgeteilt wird und eine gezielte Ableitung der Teilluftmengen in die Entlüftungsbohrungen wirkungsvoll unterstützt wird. Zwischen den Erhebungen sind somit Entlüftungskanäle gebildet, die durch die optimierte Ableitung der Luft in die Entlüftungsbohrungen eine geometrisch exakte Ausformung der Block- und Einschnittkanten sicherstellen.

In Vulkanisationsformen, die Laufstreifen von Winterreifen ausformen, ist es üblich, Lamellenbleche zu verankern, die zur Ausbildung von in Draufsicht gerade, zickzack- oder wellenförmig verlaufenden Einschnitten entsprechend gestaltet sind. Um auch bei solchen Lamellenblechen eine gute Ableitung der eingeschlossenen Luft in die Entlüftungsbohrungen sicherzustellen, wird erfindungsgemäß zumindest eine Erhebung vorgesehen, die, durch das Lamellenblech entsprechend unterbrochen, die Zickzack- oder Wellenabschnitte des Lamellenbleches quert. Üblich sind ferner auch Lamellenbleche, die zur Ausbildung von in Draufsicht treppenförmig verlaufenden, demnach abwechselnd kurze und längere Abschnitte aufweisenden Einschnitten ausgeführt sind. Bei solchen Lamellenblechen ist es vorteilhaft, wenn zumindest eine Erhebung einen mit einem längeren Abschnitt des Lamellenbleches zusammenfallenden Verlauf aufweist und entlang dieses Abschnittes in ihrem Verlauf unterbrochen ist.

Um in all jenen Bereichen der Vulkanisationsform, die Profilpositive mit Einschnitten ausformen, für eine möglichst optimale Luftableitung beim Einformen des Reifenrohlings zu sorgen, werden die Erhebungen in sämtlichen Bereichen der Vertiefungen ausgebildet.

Ein Fahrzeugluftreifen, dessen Laufstreifen in einer erfindungsgemäßen Vulkanisationsform mittels Lamellenblechen mit Einschnitten und mittels Erhebungen mit Mikrorillen versehen worden ist, ist insbesondere ein PKW-Winterreifen. Der Fahrzeugluftreifen weist daher Mikrorillen auf, die in den Profilblöcken und/oder den blockartigen Profilpositiven sämtlich gerade und zur Erstreckung der Einschnitte parallel oder im Wesentlichen parallel verlaufen. Die Mikrorillen, die durch eine Maßnahme zur Verbesserung der Luftabführung in der Reifenvulkanisationsform im Laufstreifen gebildet werden, sind bei neuem Reifen von Vorteil, da sie den Schnee- und Eisgriff unterstützen. Es ist daher auch für Reifeneigenschaften vorteilhaft, wenn sich der Laufstreifen aus Profilblöcken und/oder blockartigen Profilpositiven zusammensetzt, die jeweils mit einer Anzahl von Einschnitten und parallel oder im Wesentlichen parallel zu diesen verlaufenden Mikrorillen versehen sind.

Weitere Merkmale, Vorteile und Einzelheiten der Erfindung werden nun anhand der Zeichnung, die Ausführungsbeispiele darstellt, näher beschrieben. Dabei zeigen
Fig. 1 schematisch eine Draufsicht auf den einen Profilblock ausformenden Teilbereich der Innenseite einer Vulkanisationsform für Fahrzeugluftreifen,
Fig. 2 eine Schnittdarstellung entlang der Linie II-II der Fig.1,
Fig. 2a ein Detail der Fig. 2 in vergrößerter Darstellung,
Fig. 3 einen Teilschnitt durch einen Profilblock, geformt in einer erfindungsgemäßen Vulkanisationsform und
Fig. 4 eine Teilabwicklung eines Laufstreifens, welcher in einer erfindungsgemäß ausgeführten Vulkanisationsform vulkanisiert worden ist.

Eine Vulkanisationsform für PKW-Reifen setzt sich üblicherweise aus Seitenschalen, die die Seitenwände des Reifens formen, und aus sieben bis dreizehn Formsegmenten, die den Laufstreifenbereich des Reifens formen und mit der Laufstreifenprofilierung versehen, zusammen. Eine Vulkanisationsform für PKW-Reifen enthält ferner durchschnittlich ca. 4500 Entlüftungsbohrungen, die sich großteils in den Formsegmenten befinden. Die Entlüftungsbohrungen können simple Bohrungen sein oder es können in die Bohrungen Entlüftungseinheiten, die Entlüftungsventile enthalten, eingesetzt sein. Die Entlüftungsbohrungen gewährleisten ein Abführen der beim Einformen des Reifenrohlings zwischen diesem und der Reifenform vorhandenen Luft nach außen. Gegenüber simplen Entlüftungsbohrungen haben eingesetzte Entlüftungseinheiten den Vorteil, dass sie beim Einformen des Reifenrohlings die erforderliche Entlüftung sicherstellen, bei eingeformtem Rohling jedoch die Bohrungen verschließen.

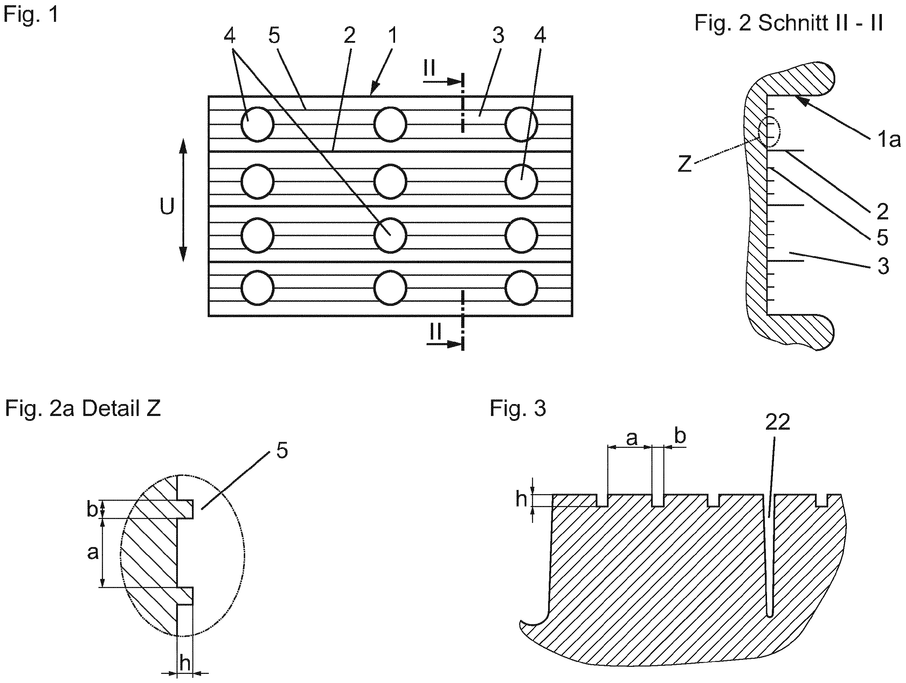

Fig. 1 zeigt eine Ansicht auf den einen Profilblock des Laufstreifens ausformenden Teilbereich eines Formsegmentes einer Reifenvulkanisationsform, wobei Fig. 1 den rechteckigen Umriss dieses Teilbereiches zeigt, welcher von Formstegen, die Rillen ausformen, begrenzt ist. Der dargestellte kleine Bereich der Reifenvulkanisationsform ist demnach eine rechteckige von Formstegen begrenzte Vertiefung, die einen in Draufsicht rechteckigen Profilblock ausformt. Der Pfeil U bezeichnet die Umfangsrichtung des geformten Laufstreifens. Die Vertiefung 1 weist zwei in Querrichtung und zwei in Umfangsrichtung U orientierte Begrenzungswände auf, Fig. 2 zeigt die beiden in Querrichtung verlaufenden Wände 1a. Parallel zueinander und zu den Wänden 1a verlaufende Lamellenbleche 2 unterteilen die Vertiefung 1 in Querrichtung und sind voneinander und zu den in Querrichtung verlaufenden Wänden 1a der Vertiefung 1 zumindest im Wesentlichen gleich beabstandet. Der Einfachheit halber sind die Lamellenbleche 2 als in radialer Richtung orientierte, ebene Bleche gezeichnet, die eine Dicke zwischen 0,4 mm und 0,6 mm aufweisen und demnach im Profilblock des Reifens gerade verlaufende Einschnitte dieser Breite ausformen. Die Lamellenbleche 2 gliedern die Vertiefung 1 in gleichgroße Abschnitte 3, von deren Boden jeweils drei Entlüftungsbohrungen 4 in das Formsegmentinnere verlaufen. Zwei der Entlüftungsbohrungen 4 sind an den seitlichen Randabschnitten der Abschnitte 3, eine Entlüftungsbohrung 4 ist im mittleren Bereich angeordnet. Zwischen den einzelnen Lamellenblechen 2 sowie dem jeweils äußeren Lamellenblech 2 und der benachbarten, in Querrichtung verlaufenden Wand 1a der Vertiefung 1 sind an der Forminnenseite parallel zu den Lamellenblechen 2 Erhebungen 5 ausgebildet. Bei der gezeigten Ausführungsform sind in jedem Abschnitt 3 drei Erhebungen 5 vorgesehen, die ebenfalls zueinander und zu den Lamellenblechen 2 zumindest im Wesentlichen gleich große Abstände aufweisen. Die Erhebungen 5 sind im Querschnitt vorzugsweise rechteckig oder quadratisch, ihre Breite b beträgt 0,2 mm bis 0,3 mm, ihre Höhe h ebenfalls 0,2 mm bis 0,3 mm. Ihr gegenseitiger Abstand a sowie ihr Abstand a zur Wand 1a und zu den Lamellenblechen 2 beträgt zwischen 1 mm und 1,5 mm.

Die Erhebungen 5 sind in ihrem Verlauf durch die Entlüftungsbohrungen 4 unterbrochen. Beim Einformprozess des Rohreifens in die Vulkanisationsform wirken die Erhebungen 5 als Abstandhalter. Der Reifenrohling kommt gegen Ende des Einformprozesses in Kontakt mit den Erhebungen 5, sodass die zwischen der Außenseite des Rohreifens und der Innenseite der Vertiefung 1 eingeschlossene Luft in eine Vielzahl von Teilluftmengen aufgeteilt wird, die eine gezielte Entlüftung bzw. Abfuhr der eingeschlossenen Luft in die Entlüftungsbohrungen 4 unterstützen. Damit wird eine korrekte bzw. exakte Ausformung des Profilblockes in der Vertiefung 1, insbesondere der Einschnitte, durch die Lamellenbleche 2 gewährleistet, sodass exakt ausgeformte Griffkanten im Profilblock gebildet werden.

Eine Vulkanisationsform gemäß der Erfindung weist zumindest in jenen Bereichen, die Profilblöcke formen, die eine Anzahl von Einschnitten aufweisen, Erhebungen 5 als Abstandhalter auf. Der Großteil der Erhebungen 5 besitzt einen Anschluss zu zumindest einer Entlüftungsbohrung 4. Vereinzelt können jedoch auch, vor allem in Bereichen, die Eckbereiche von Profilpositiven ausbilden, Erhebungen vorgesehen sein, die keinen Anschluss zu einer Entlüftungsbohrung aufweisen.

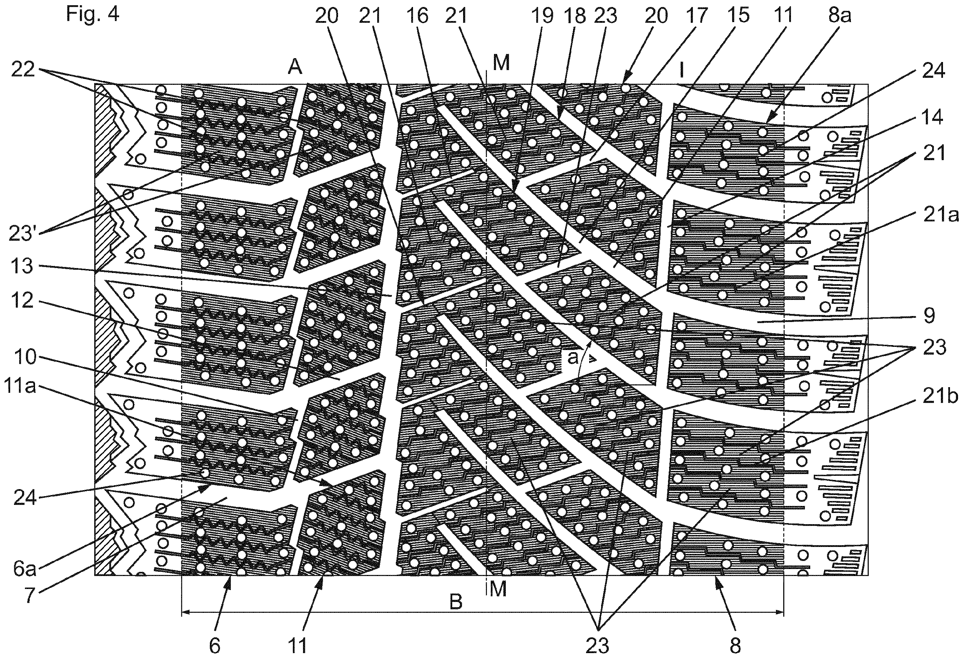

Fig. 4 zeigt eine Teilabwicklung einer Ausführungsvariante eines in einer Vulkanisationsform gemäß der Erfindung geheizten Laufstreifens eines PKW - Winterreifens, wobei mit B die Breite des bodenberührenden Teils des Laufstreifens - die Breite, die der Reifen in Bodenaufstandsfläche beim Abrollen einnimmt - ermittelt gemäß den E.T.R.T.O.-Standards - bezeichnet ist. M-M bezeichnet die mittlere Umfangslinie des Laufstreifens, den Reifenäquator. Das beispielhaft gezeigte Laufstreifenprofil ist asymmetrisch gestaltet und besitzt daher strukturell unterschiedlich ausgeführte Profilpositive in den beiden Laufstreifenhälften. Der Laufstreifen weist schulterseitig je eine in Umfangsrichtung umlaufende Blockreihe 6, 8 auf, welche sich jeweils aus Blöcken 6a bzw. 8a zusammensetzt, die in Umfangsrichtung durch Querrillen 7, 9 voneinander getrennt sind. An die Blockreihe 6 schließt, durch eine in Umfangsrichtung umlaufende Umfangsrille 10 von dieser getrennt, eine weitere Blockreihe 11 mit Blöcken 11a an, die durch Querrillen 12 voneinander getrennt sind. Eine weitere Umfangsrille 13 trennt die Blockreihe 11 von einem bis zur zweiten schulterseitigen Blockreihe 8 reichenden Umfangsbereich, in welchem Profilblöcke 18 und blockartigen Profilpositive 19,20 ausgebildet sind. Zur Blockreihe 8 verläuft eine weitere Umfangsrille 14. Von der Umfangsrille 14 ausgehend verlaufen leicht bogenförmig gekrümmt Schrägrillen 15 unter einem Winkel α von etwa 35 ° bis 45 ° bis über die Mittelumfangslinie M-M hinaus. Gegensinnig zu den Schrägrillen 15 orientierte weitere Schrägrillen 16 und 17 gliedern diesen Bereich des Laufstreifens in die Profilblöcke 18 und die blockartigen Profilpositive 19, 20.

Sämtliche Blöcke 6a, 8a, 11a, 18 sowie sämtliche blockartigen Profilpositive 19, 20 sind jeweils mit einer Anzahl von sich parallel zueinander erstreckenden Einschnitten 21, 22 versehen. Die Einschnitte 21 in den Blöcken 8a, 18 und den blockartigen Profilpositiven 19, 20, weisen, in Draufsicht betrachtet, einen im Wesentlichen treppenförmigen Verlauf mit abwechselnd kurzen und längeren Abschnitten 21a, 21b auf und erstrecken sich parallel zu Querrillen 9 in den schulterseitigen Blockreihen 11 und zu den Schrägrillen 15, 16 zwischen den Blöcken 18 bzw. den blockartigen Profilpositiven 19, 20. Die Einschnitte 22 in den schulterseitigen Blöcken 6a und den Blöcken 11a weisen in Draufsicht einen wellen- bzw. zickzackförmigen Verlauf mit etwa gleich langen Abschnitten auf. In den Blöcken 6a erstrecken sich die Einschnitte 22 parallel zu den Querrillen 7, die zwischen den Blöcken 6a verlaufen. Die in den Blöcken 11a angeordneten Einschnitte 22 weisen einen zu den Querrillen 12 zwischen den Blöcken 11a gegengewinkelten Verlauf auf.

Sämtliche Einschnitte 21 und 22 werden mit entsprechenden Lamellenblechen und in einer Breite von 0,4 mm bis 0,6 mm geformt. Sämtliche Blöcke 6a, 8a, 11a, 18 und blockartige Profilpositive 19, 20 sind ferner mit einer Vielzahl von parallel zueinander verlaufenden Mikrorillen 23, 23' versehen, insbesondere "überzogen", die mittels Erhebungen 5 in der Vulkanisationsform gebildet worden sind. Ein Großteil der Mikrorillen 23, 23' ist in ihrem Verlauf durch runde Freistellen 24, die an den Stellen der Entlüftungsbohrungen 4 gebildet worden sind, unterbrochen. Die Dimensionen der Mikrorillen 23, 23', ihre Breite, ihre Tiefe und ihr gegenseitiger Abstand sowie ihr Abstand zu den Blockkanten, entsprechen den oben erwähnten Dimensionen für b, h und a, wie es in Fig. 3 gezeigt ist. In den Blöcken 6a, 11a, mit wellenförmig verlaufenden Einschnitten 22 verlaufen die Mikrorillen 23' parallel zur Erstreckung der Einschnitte 22, wobei zwei bis drei Mikrorillen 23' die Zickzack- bzw. Wellenabschnitte der Einschnitte 22 kreuzen. In den Blöcken 8a, 18 und den blockartigen Profilpositiven 19, 20 mit treppenförmig verlaufenden Einschnitten 21 verlaufen die Mikrorillen 23 bevorzugt parallel zu den längeren Abschnitten 21b, einige kreuzen die kurzen Abschnitte 21a der Einschnitte 21.

### Bezugsziffernliste

- 1 .......................: Vertiefung
- 1a .....................: Begrenzungswand
- 2 .......................: Lamellenblech
- 3 .......................: Abschnitt
- 4 .......................: Entlüftungsbohrung
- 5 .......................: Erhebung
- 6 .......................: Blockreihe
- 6a .....................: Block
- 7 .......................: Querrille
- 8 .......................: Blockreihe
- 8a .....................: Block
- 9 .......................: Querrille
- 10 .....................: Umfangsrille
- 11 .....................: Blockreihe
- 11a ...................: Block
- 12 .....................: Querrillen
- 13 .....................: Umfangsrille
- 14 .....................: Umfangsrille
- 15 .....................: Schrägrille
- 16 .....................: Schrägrille
- 17 .....................: Schrägrille
- 18 .....................: Profilblock
- 19 .....................: blockartiges Profilpositiv
- 20 .....................: blockartiges Profilpositiv
- 21 .....................: Einschnitt
- 21a ...............: Abschnitt
- 21b...............: Abschnitt
- 22.....................: Einschnitt
- 23, 23'.............: Mikrorillen
- 24.....................: Freistellen
- II- II ..................: Linie
- B ......................: Breite der Bodenaufstandsfläche
- M-M.................: Reifenäquator
- a .......................: Abstand
- b .......................: Breite
- h.......................: Höhe
- α ......................: Winkel

## Patentansprüche

1. Vulkanisationsform zum Vulkanisieren eines Fahrzeugluftreifens, insbesondere eines PKW-Winterreifens, mit Formensegmenten, welche den profilierten Laufstreifen des Reifens ausformen und Formstege aufweisen, die Vertiefungen (1) zur Ausformung von Profilblöcken (6a, 8a, 11a) oder blockartigen Profilpositiven (19, 20) bilden, wobei in Vertiefungen (1) Lamellenbleche (2) zur Ausformung von Einschnitten (21, 22) in den Profilblöcken (6a, 8a, 11a) bzw. blockartigen Profilpositiven (19, 20) verankert sind, wobei die Lamellenbleche (2) die Vertiefungen (1) in Abschnitte (3) unterteilen, in welchen jeweils zumindest eine Entlüftungsbohrung (4) im Formsegment ausgebildet ist,
**dadurch gekennzeichnet,**
**dass** in den Abschnitten (3) der Vertiefungen (1) parallel zur Erstreckung der Lamellenbleche (2) jeweils eine Anzahl von die jeweilige Vertiefung (1) durchquerenden Erhebungen (5) ausgebildet ist, welche gerade verlaufen und eine Basisbreite und eine Höhe von 0,2 mm bis 0,3 mm aufweisen und deren gegenseitiger Abstand zwischen 1 mm und 1,5 mm beträgt und deren Verlauf durch die Entlüftungsbohrungen (4) unterbrochen sind.

2. Vulkanisationsform nach Anspruch 1, **dadurch gekennzeichnet, dass** die Lamellenbleche (2) zur Ausbildung von in Draufsicht gerade, zickzack- oder wellenförmig verlaufenden Einschnitten (22) ausgeführt sind, wobei zumindest eine Erhebung (5), durch das Lamellenblech (2) entsprechend unterbrochen, die Zickzack- oder Wellenabschnitte des Lamellenbleches (2) quert.

3. Vulkanisationsform nach Anspruch 1, **dadurch gekennzeichnet, dass** die Lamellenbleche (2) zur Ausbildung von in Draufsicht treppenförmig verlaufenden, abwechselnd kurze und längere Abschnitte (21a, 21b) aufweisenden Einschnitten (21) ausgeführt sind, wobei zumindest eine Erhebung (5) einen mit einem längeren Abschnitt (21b) zusammenfallenden Verlauf aufweist und entlang dieses Abschnittes (21b) in ihrem Verlauf unterbrochen ist.

4. Vulkanisationsform nach einem der Ansprüche 1 bis 3, **dadurch gekennzeichnet, dass** die Erhebungen (5) in sämtlichen Bereichen der Vertiefung (1) ausgebildet sind.

## Claims

1. Vulcanization mold for vulcanizing a pneumatic vehicle tire, in particular a passenger vehicle winter tire, having mold segments which form the profiled tread strip of the tire and have mold webs which form depressions (1) for forming profile blocks (6a, 8a, 11a) or block-like profile positives (19, 20), lamellar plates (2) for forming sipes (21, 22) in the profile blocks (6a, 8a, 11a) and/or block-like profile positives (19, 20) being anchored in depressions (1), the lamellar plates (2) dividing the depressions (1) into portions (3), in which in each case at least one ventilating bore (4) is configured in the mold segment,
**characterized**
**in that** in each case a number of elevations (5) which cross the respective depression (1) are configured in the portions (3) of the depressions (1) parallel to the extent of the lamellar plates (2), which elevations (5) run in a straight manner and have a base width and a height of from 0.2 mm to 0.3 mm, and the mutual spacing of which is between 1 mm and 1.5 mm, and the course of which is interrupted by the ventilating bores (4).

2. Vulcanization mold according to Claim 1, **characterized in that** the lamellar plates (2) are configured for forming sipes (22) which run in a straight, zigzag or undulating manner in plan view, at least one elevation (5), interrupted correspondingly by the lamellar plate (2), crossing the zigzag or undulating portions of the lamellar plate (2).

3. Vulcanization mold according to Claim 1, **characterized in that** the lamellar plates (2) are configured for forming sipes (21) which run in a stepped manner in plan view and have alternately short and longer portions (21a, 21b), at least one elevation (5) having a course which coincides with a longer portion (21b) and the course of said elevation (5) being interrupted along said portion (21b) .

4. Vulcanization mold according to one of Claims 1 to 3, **characterized in that** the elevations (5) are configured in all regions of the depression (1).

## Revendications

1. Moule de vulcanisation pour la vulcanisation d'un pneumatique de véhicule, en particulier d'un pneu hiver pour voiture, avec des segments de moule, qui façonnent la bande de roulement profilée du pneumatique et qui présentent des nervures de moulage, qui forment des creux (1) pour le moulage de blocs profilés (6a, 8a, 11a) ou de profils positifs de type bloc (19, 20), dans lequel des lamelles de tôle (2) sont ancrées dans les creux (1) pour le formage d'entailles (21, 22) dans les blocs profilés (6a, 8a, 11a) ou les profils positifs de type bloc (19, 20), dans lequel les lamelles de tôle (2) divisent les creux (1) en parties (3), dans lesquelles chaque fois au moins un trou de ventilation (4) est formé dans le segment de moule,
**caractérisé en ce qu'**un nombre de protubérances (5) traversant le creux respectif (1) sont formées chaque fois dans les parties (3) des creux (1) parallèlement à l'extension des lamelles de tôle (2), protubérances (5) qui s'étendent en ligne droite et présentent une largeur de base et une hauteur de 0,2 mm à 0,3 mm et dont la distance mutuelle vaut entre 1 mm et 1,5 mm et dont les tracés sont interrompus par les trous de ventilation (4) .

2. Moule de vulcanisation selon la revendication 1, **caractérisé en ce que** les lamelles de tôle (2) sont réalisées de façon à former des entailles (22) s'étendant en ligne droite, en zigzag ou sous forme ondulée dans une vue en plan, dans lequel au moins une protubérance (5), interrompue de façon correspondante par la lamelle de tôle (2), traverse les parties en zigzag ou de forme ondulée de la lamelle de tôle (2).

3. Moule de vulcanisation selon la revendication 1, **caractérisé en ce que** les lamelles de tôle (2) sont réalisées de façon à former des entailles (21) présentant des parties (21a, 21b) alternativement courtes et plus longues s'étendant en forme d'escalier dans une vue en plan, dans lequel au moins une protubérance (5) présente un tracé coïncidant avec une partie plus longue (21b) et dont le tracé est interrompu le long de cette partie (21b) .

4. Moule de vulcanisation selon l'une quelconque des revendications 1 à 3, **caractérisé en ce que** les protubérances (5) sont formées dans toutes les régions du creux (1).
